# EUROPEAN PATENT APPLICATION

(11) **EP 3 716 432 A1**
(43) Date of publication of application: **30.09.2020**
(21) Application number: 19166242.8
(22) Date of filing: 29.03.2019
(51) Int. Cl.: H02H 3/02, H02H 3/06, H02H 7/04, H02H 7/12, H02H 9/00, H02M 1/32

(54) **OPERATING A CIRCUIT BREAKER FROM A VARIABLE SPEED DRIVE ARRANGEMENT**

(71) Applicant: ABB Schweiz AG, 5400 Baden (CH)
(72) Inventor: LINDELL, Elisabeth, 722 22 Västerås (SE); RAUCHENSTEIN, Jürg, 8853 Lachen (CH); LILJESTRAND, Lars, 722 42 Västerås (SE)
(74) Representative: Kransell & Wennborg KB

(57) **Abstract**

The invention concerns a variable speed drive arrangement (16) as well as a method and computer program product for operating a circuit breaker (12) from such a variable speed drive arrangement (16). The arrangement (16) is connected between a load (18, 20) and an AC system (10) via a drive transformer (14) and the circuit breaker (12) and comprises an AC to AC converter (24) connected to the AC system (10). It also comprises a control unit (26) controlling the converter (24). When there is a need to operate the circuit breaker (12), the control unit (26) obtains measurements of at least one electrical property (EP) of the connection, determines at least one phase angle when the circuit breaker (12) is to be operated and sends, to the circuit breaker (12), at least one control signal (S) controlling the circuit breaker (12) to perform the operation at the determined phase angle.

## Description

### FIELD OF INVENTION

The present invention generally relates to a variable speed drive arrangement as well as a method and computer program product for operating a circuit breaker from such a variable speed drive arrangement.

### BACKGROUND

A variable speed drive (VSD) is a drive used to drive a load such as a load comprising one or more motors. The VSD drive may in turn be connected to an alternating current (AC) system via a circuit breaker.

One realization of above-mentioned connection is schematically disclosed in US 2005/0225270, where a VSD is connected to an AC power source via a circuit breaker and an autotransformer, where the autotransformer can be seen as one type of drive transformer. The VSD comprises an AC to AC converter used to drive a pair of motors and a control unit controlling the AC to AC converter.

In such a realization there may be a need to connect and disconnect the VSD to and from the AC system. However, if this is not carried out properly it is possible that the drive transformer is harmed.

It would in this respect therefore be of interest to protect the drive transformer at such connection and disconnection of the drive to and from the AC system.

Aspects of the invention are directed towards such protection of the drive transformer.

### SUMMARY OF THE INVENTION

One object of the present invention is to protect the drive transformer connected between a variable speed drive arrangement and an AC system.

This object is according to a first aspect achieved through variable speed drive (VSD) arrangement connected between a load and an alternating current (AC) system via a drive transformer and a circuit breaker, the VSD arrangement comprising
an alternating current to alternating current (AC - AC) converter having a load side for connection to the load and a drive side for connection to the AC system, and
a control unit configured to control the AC to AC converter for operating the load,
wherein the control unit is configured to execute the following steps when there is a need to operate the circuit breaker:
obtain measurements of at least one electrical property of the connection between the AC system and the converter,
determine at least one phase angle when the circuit breaker is to be operated based on the measurements, and
send, to the circuit breaker, at least one control signal controlling the circuit breaker to perform the operation at the determined phase angle.

This object is according to a second aspect achieved through a method of operating a circuit breaker from a variable speed drive (VSD) arrangement connected between a load and an alternating current (AC) system via a drive transformer and the circuit breaker, the VSD arrangement comprising an alternating current to alternating current (AC - AC) converter having a load side connected to the load and a drive side connected to the AC system, the method being performed by a control unit of the VSD arrangement configured to control the AC to AC converter for operating the load and comprising, when there is a need to operate the circuit breaker, the steps of:
obtaining measurements of at least one electrical property of the connection between the AC system and the converter,
determine at least one phase angle when the circuit breaker is to be operated based on the measurements, and
send, to the circuit breaker, at least one control signal controlling the circuit breaker to perform the operation at the determined phase angle.

The object is according to a third aspect achieved through a computer program product for operating a circuit breaker from a variable speed drive (VSD) arrangement connected between a load and an alternating current (AC) system via a drive transformer and the circuit breaker, the VSD arrangement comprising an alternating current to alternating current (AC - AC) converter having a load side connected to the load and a drive side connected to the AC system, the computer program product comprising a data carrier with computer program code which when run in a control unit of the variable speed drive arrangement configured to control the AC - AC converter for operating the load, causes the control unit to execute the following steps when there is a need to operate the circuit breaker:
obtain measurements of at least one electrical property of the connection between the AC system and the converter,
determine at least one phase angle when the circuit breaker is to be operated based on the measurements, and
send, to the circuit breaker, at least one control signal controlling the circuit breaker to perform the operation at the determined phase angle.

The circuit breaker may have an open state and a closed state. The determining of the phase angle at which to operate the circuit breaker may consider the operational time of the circuit breaker, i.e. the time it takes from the initiation of the operation until a desired state is achieved.

The determined phase angle may be the phase angle at which the circuit breaker operation is finalized, such as the phase angle at which contact separation or contact touch is achieved.

The need for operating the circuit breaker may occur because the VSD arrangement is to be connected or disconnected to the AC system for instance in relation to maintenance.

The need for operating the VSD arrangement may additionally occur because of a protection condition, such as if there is a fault in the VSD arrangement. The protection condition may occur because of an electrical property of the variable speed drive arrangement crossing a corresponding threshold, such as the current or voltage on the drive side, load side or within the AC -AC converter exceeding or going below a corresponding voltage or current threshold.

According to a first variation of the above-mentioned aspects, the operation is the opening of the circuit breaker and the determined phase angle is an opening phase angle that is a phase angle of the current through the circuit breaker.

The measured electrical property may comprise a current through the connection, which may be the current through the circuit breaker. As an alternative it may be a current delivered by the drive transformer to the converter. The measured current may therefore be the current delivered by the drive transformer to the converter.

The control unit may thereby, when determining an opening phase angle, be configured to determine the current through the circuit breaker based on the current delivered by the drive transformer. The current measurements that are used may thus comprise measurements of the current delivered by the drive transformer.

As an alternative the determining of the opening phase angle is based on a measured voltage of the connection and the power factor, where the measured voltage may be a voltage on the system side of the circuit breaker, on the load side of the circuit breaker or between the drive transformer and the AC to AC converter. The current through the circuit breaker may thus be determined based on a voltage measurement if the power factor, i.e. the phase relationship between the voltage and current, is known.

According to a further variation of the above-mentioned aspects, the connection is a three-phase connection and the determined opening phase angle comprises the opening phase angle of a leading phase, which opening phase angle has a determined relationship to current zero-crossings.

It is possible that the determined relationship comprises a forbidden interval for an opening phase angle, which forbidden interval is at least 1 ms long, starts at least 1 ms before a current zero-crossing of the leading phase and ends at or after this current zero-crossing. The forbidden interval may thus be more than 1 ms long, such as 2 ms long, in which case it also could end 1 ms after the current zero-crossing.

The opening phase angles of each phase may precede the current zero-crossing of its corresponding phase current by more than 1 ms.

The determined relationship may additionally comprise a safe window between the beginning of the forbidden interval and the forbidden interval associated with a preceding current zero-crossing of a trailing phase, the opening phase angle of the leading phase being within the safe window.

It is furthermore possible that the safe window has a length that is one sixth of the period of the current minus the length of the forbidden interval.

The circuit breaker may also have three branches that may be opened simultaneously.

As an alternative, the circuit breaker may have three branches where at least one branch is opened at a different time than the rest of the branches. Here it is additionally possible that one branch, with advantage the branch of the leading phase, is opened according to the defined relationship to the leading phase followed by the simultaneous opening of the remaining branches.

The electrical properties may additionally comprise a voltage at a system side of the circuit breaker, the operation may be the closing of the circuit breaker and the determined phase angle may be a closing phase angle. In this case it is possible that the closing phase angle comprises the phase angle of the maximum or minimum voltage of the leading phase.

The VSD arrangement may additionally comprise the drive transformer. If the drive transformer is a three-phase transformer it may have more than one low voltage winding per phase, such as two.

The present invention has a number of advantages. It reduces the electrical stresses on the VSD arrangement and in particular the drive transformer and therefore these are protected. It has the further advantage in that the use of RC snubbers may be omitted. Another benefit is that vacuum circuit breakers could be used without causing multiple re-ignitions leading to voltage escalation. Further, it would also allow for easier and more sensible setting of a relay protection to be made.

### BRIEF DESCRIPTION OF THE DRAWINGS

The present invention will in the following be described with reference being made to the accompanying drawings, where
fig. 1 schematically shows a single line diagram of a VSD arrangement being connected to a load as well as to an AC system via a drive transformer and a circuit breaker,
fig. 2 schematically shows a first realization of the circuit breaker,
fig. 3 schematically shows a second realization of the circuit breaker,
fig. 4 schematically shows a number of method steps being performed by a control unit of the VSD arrangement in order to control the circuit breaker,
fig. 5 schematically shows phase currents through the circuit breaker together with two forbidden intervals and a safe window, and
fig. 6 schematically shows a computer program product in the form of a data carrier with computer program code for carrying out the circuit breaker control functionality of the control unit.

### DETAILED DESCRIPTION OF THE INVENTION

In the following, a detailed description of embodiments will be given.

Aspects of the invention are directed towards controlling a circuit breaker from a variable speed drive (VSD) arrangement that is connected to an AC system via a connection comprising a circuit breaker and a drive transformer.

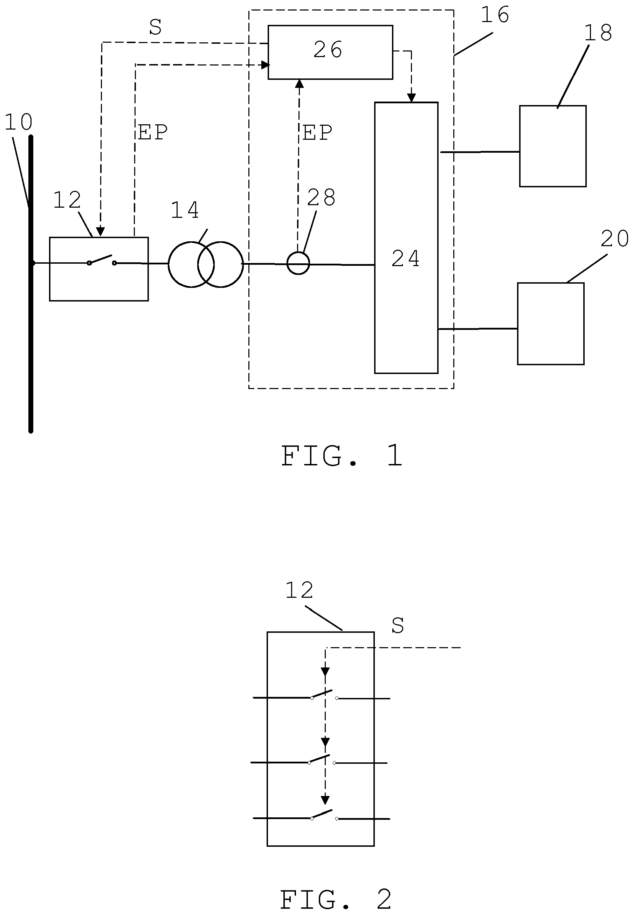

Fig. 1 schematically shows a single line diagram of the variable speed drive (VSD) arrangement 16 for connection between an AC system 10 and a load. The AC system 10 is in the embodiment shown in fig. 1 a three-phase AC system. In the example the load comprises two motors 18 and 20 that are coupled to the AC system via the VSD arrangement 16. The motors 18 and 20 are more particularly connected to the load side of an AC to AC (AC - AC) converter 24 of the VSD arrangement 16. The AC - AC converter 24 also has a drive side, which is connected to the AC system 10 via a drive transformer 14 and a circuit breaker 12. The circuit breaker 12 may be a three-phase AC circuit breaker, for instance in the form of a vacuum circuit breaker, and the drive transformer 14 may be based on a three-phase transformer. As an alternative it is possible that there are three single-phase circuit breakers and/or three or even six single-phase drive transformers instead. The circuit breaker 12 has a system side connected to the conductors of the AC system 10 and a drive side connected to a primary side of the drive transformer 14. The drive transformer also has a secondary side that is connected to the AC - AC converter 24. The drive transformer may have more than one low voltage winding per phase, such as two, on the secondary side. In the case of six secondary or low voltage windings, which are used with three primary windings, three of the six windings may be delta-connected and the other three may be wye-connected. As an alternative to this latter realization it is possible with two drive transformers, each having three primary and three secondary windings, where the secondary windings of one transformer are delta-connected and the secondary windings of the other transformer are wye-connected.

The VSD arrangement 16 comprises a control unit 26, which control unit 26 controls the AC-AC converter 24 for operating the load. The operation of the load may involve the supply of power to the load. However, the control unit 26 also controls operation of the circuit breaker 12, which is indicated through a signal S being sent to the circuit breaker 12. This operation is based on an analysis of at least one electrical property EP of the connection between the AC system 10 and the AC - AC converter 24, such as a voltage and/or a current. For this reason, the control unit 26 may be connected to a sensor 28 in the connection, which sensor senses the electrical property of the connection. In case a current is sensed the sensor may comprise a current transformer and if a voltage is sensed the sensor may comprise a voltage transformer. The measurements may additionally be subjected to signal conditioning and analog-to-digital (A/D) conversion before being processed in the control unit 26.

The sensor 28 is in the example of fig. 1 shown as being placed on the secondary side of the drive transformer 14, i.e. on the side connected to the AC-AC converter 24. However, it is possible that the sensor is provided on the primary side of the drive transformer 14, i.e. on the side connected to the circuit breaker 12. Another possible placing of the sensor is between the AC system 10 and the circuit breaker 12. It is also possible that such a sensor is included in or connected to the circuit breaker 12 (not shown) and for this reason the circuit breaker 12 may also or instead provide electrical property measurements EP to the control unit 26.

As is known in the art a circuit breaker comprises at least one pair of contacts and, when being provided in the circuit breaker 12, the sensor may be placed on the system side of the contact pair, i.e. on the system side of the circuit breaker 12 that faces the AC system 10 or on the drive side of the contact pair, i.e. on the drive side of the circuit breaker 12 facing the drive transformer 14.

Fig. 2 shows one realization of the circuit breaker 12 in the form of a three-phase circuit breaker and the signal S. In this case the circuit breaker 12 comprises three branches, where there is one branch per phase and each branch comprises a contact pair comprising two contacts, where the contacts may be closed, open or transitioning between being closed or open. In the variation shown here the signal S is used for actuating the three contact pairs simultaneously. The signal S is thus used for operating all three contact pairs simultaneously, where the actuation may be an opening or closing of the contact pairs of the circuit breaker 12. As an alternative it is possible that the circuit breaker when receiving the signal S applies the actuation of the three contact pairs in a staggered way, i.e. at different points in time, for being operated at these different points in time. Alternatively, the actuation may be initiated simultaneously, but the final positions of the different contact pairs are reached at different points in time due to the mechanical construction of the circuit breaker 12.

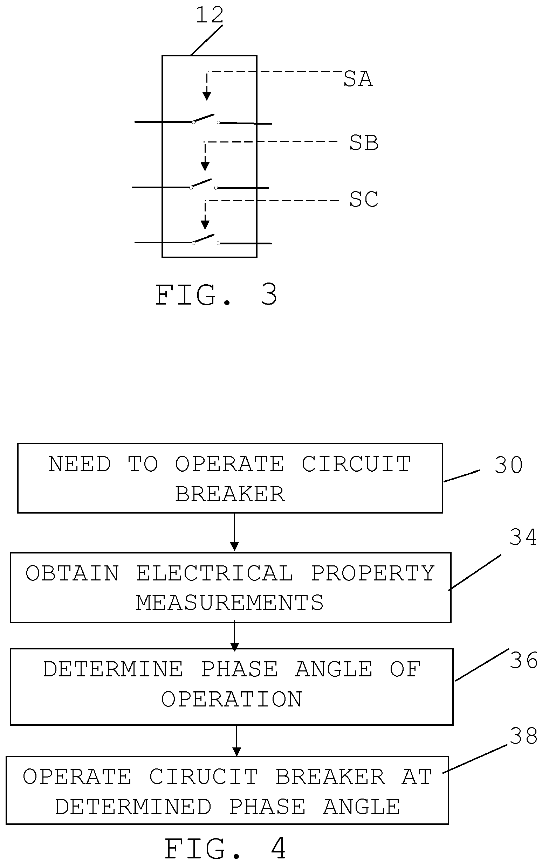

Fig. 3 shows another realization of the circuit breaker 12, where each contact pair is actuated individually. The control unit therefore provides a first control signal SA for a first contact pair, a second control signal SB for a second contact pair and a third control signal SC for a third contact pair.

There are times when the circuit breaker 12 may need to be operated, such as when a load is to be connected or disconnected from the AC system 10. The circuit breaker 12 may thus be operated to have an open state or a closed state. One reason for opening or closing the circuit breaker 12 is when maintenance is to be or has been done. It may also be opened in cases of faults in the VSD arrangement 16. It is for instance possible that the VSD arrangement experiences conditions in which it needs to be protected. The need for operating the circuit breaker 12 may thus be because there is a fault in the VSD arrangement 16. A protection condition may occur because an electrical property of the variable speed drive arrangement crosses a corresponding threshold, such as the current or voltage on the drive side, load side or within the AC -AC converter exceeding or going below a corresponding voltage or current threshold.

It may be possible to operate the circuit breaker 12 via the VSD arrangement 16 during normal conditions, i.e. through the control unit 26 sending a command to the circuit breaker 12 when it needs to open or close. Moreover, such a signal may be sent at any phase angle of the current through the circuit breaker 12 or at any phase angle of the voltage applied at the system side of the circuit breaker 12.

However, in case the circuit breaker 12 is opened at any phase angle severe transient over voltages may appear.

Also at energizing of the transformer 14, which is done in some situations when the circuit breaker 12 is in the process of getting closed, the circuit breaker 12 has been known to trip on large inrush currents.

The overvoltages and large currents are stressing the products in the systems, in particular the drive transformer, which may therefore fail.

The timing of such opening or closing may thus be important. A wrongly timed operation may above all be detrimental to the drive transformer.

Aspects of the invention are directed towards such protection of the drive transformer 14.

It is here proposed to include some logic in the control unit 26, which logic controls the opening and closing of the circuit breaker 12 as well as at which phase angle the opening and closing are performed by the circuit breaker 12. This may be done through controlling the time at which the "open" and "close" commands are sent to the circuit breaker 12. In this way, a major part of the transient overvoltages at opening could be avoided.

A method of operating the circuit breaker being performed by the control unit will now be described with reference also being made to fig. 4, which shows a number of steps in the method.

The method may be initiated by the need for operating the circuit breaker 12, step 30, which may be because of any of the previously discussed reasons.

When this need exists, the control unit 26 obtains measurements of at least one electrical property of the connection, i.e. electrical property measurements EP of the connection between the AC system 10 and the converter 24, step 34. This may be a current through the connection and/or a voltage of the connection, such as a voltage on the system side of the circuit breaker 12. The measurements may also be obtained from the interface between the drive transformer 14 and the converter 24, for instance via the sensor 28 and/or measurements obtained at the system side of the circuit breaker 12.

Based on the obtained electrical properties EP, the control unit 26 then determines at least one phase angle of the operation, step 36. It thus determines at least one phase angle at which the circuit breaker 12 is to be operated. If the operation is the opening of the circuit breaker 12, this may be the phase angle of the current through the circuit breaker at which opening is to be made. If the operation is the closing of the circuit breaker 12, this may be the phase angle of the AC system voltage at which closing is to be made. The determined phase angle is a phase angle that limits the stress on the drive transformer 14 for instance through limiting the overvoltages on or inrush currents into the drive transformer 14.

After the phase angle has been determined the control unit 26 sends at least one control signal to the circuit breaker 12 operating it at the determined phase angle, step 38. In case of opening, the circuit breaker 12 may be opened at the determined phase angle which may be the phase angle of the current through the circuit breaker. In case of closing, the circuit breaker 12 may be closed at the determined phase angle which may be the phase angle of a voltage at the system side of the circuit breaker 12. The determined phase angle may additionally be the phase angle at which a respective operation is finalized.

Now a number of variations of operating the circuit breaker 12 to be opened will be described.

When the circuit breaker 12 is to be opened, the opening takes place at an opening phase angle of the current running through the circuit breaker 12. In case the VSD arrangement 16 has a signal line to the circuit breaker 12, this current may be obtained from a measurement of the current through the circuit breaker 12. As an alternative it is possible that the primary side of the drive transformer 14 has sensors for sensing this current. However, at times it is possible that neither the drive transformer 14 nor the circuit breaker 12 is able to provide such a current measurement of the current running through the circuit breaker 12. In this case it may be necessary to measure the current on the secondary side of the drive transformer 14, which may be done using the sensor 28 in the VSD arrangement 16. The sensed current may therefore be the current delivered by the drive transformer 14 to the AC - AC converter 24. It is possible that the drive transformer 14 introduces a phase shift in the current delivered to the AC-AC converter 24 and therefore the control unit 26 may determine a current on the primary side of the drive transformer 14 without the introduced phase shift. It may thus subtract the phase shift from the detected current in order to obtain the current running through the circuit breaker 12 and thereby obtain the actual current running in the circuit breaker 12. It can thereby also be seen that the control unit 26, when determining the opening phase angle of the current running through the circuit breaker 12, determines this current based on the current measurements of the current delivered by the drive transformer 14 to the AC - AC converter 24. As an alternative a measured voltage of the connection and the power factor may be used, where the measured voltage may be a voltage on the system side of the circuit breaker 12, on the load side of the circuit breaker 12 or between the drive transformer 14 and the AC - AC converter 24. The current through the circuit breaker may thus additionally be determined based on a voltage measurement if the power factor, i.e. the phase relationship between the voltage and current, is known.

The determining of the opening phase angle may also consider the operational time of the circuit breaker, i.e. the time it takes from the initiation of the operation until the desired state is achieved. As has been stated earlier, the operation time is the time it takes from the initiation of the opening until the contacts have reached the desired position with a known contact movement speed. The desired position is a position when it is possible for an arc between the contacts to be extinguished without causing a re-ignition or re-strike.

According to some aspects the branches of the circuit breaker 12 are opened simultaneously. As can be seen in fig. 2, the same control signal S may be used for all the three phases. One phase may more particularly be a leading phase. This means that this phase is the phase that the circuit breaker 12 is to operate first. In the present case this means that for this phase the current will be interrupted first.

In order to obtain the desired overvoltage reduction, the opening phase angle of the control signal S may need to have a determined relationship to current zero-crossings. The opening phase angle of the leading phase may more particularly have a determined relationship to current zero-crossings. The opening phase angle may in this case be the phase angle at which circuit breaker opening is finalized, which is when contact separation is achieved. In the determining of the opening phase angle, the control unit 26 selects an opening phase angle of the current through the circuit breaker that has the defined relationship to current zero-crossings, which may be an opening phase angle of the leading phase.

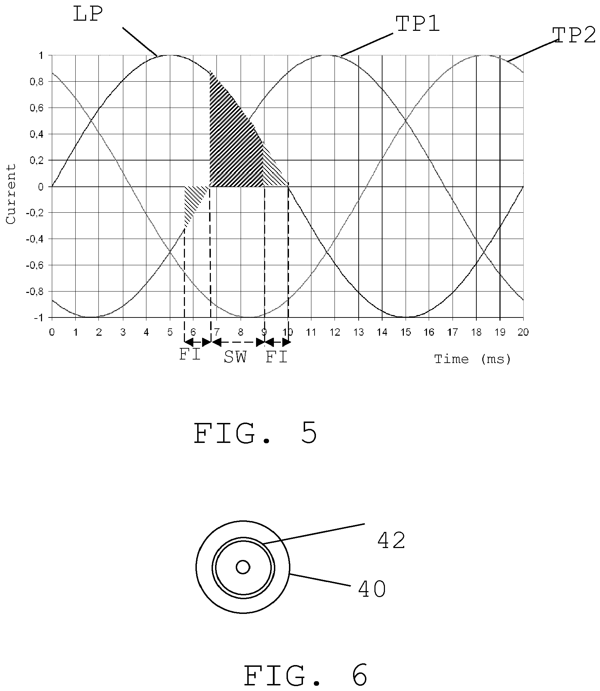

What this determined relationship may look like can be seen in fig. 5, which shows the leading phase LP, a first trailing phase TP1, a second trailing phase TP2, a forbidden interval FI before a current zero crossing of the leading phase LF, a forbidden interval FI before a previous current zero crossing of the first trailing phase TP1 and a safe window SW. The forbidden interval FI and possibly also the safe window SW may be included in the above-mentioned defined relationship. The forbidden interval FI associated with the leading phase LP may be at least 1 ms long. It may additionally start at least 1 ms before a current zero crossing of the leading phase LP. The forbidden interval may additionally end at or after this current zero-crossing of the leading phase. If the forbidden interval is 1 ms long and starts 1 ms before the current zero-crossing, then it, as is shown in fig. 5, ends at the current zero-crossing. It is possible that the forbidden interval is longer than 1 ms. If starting 1 ms before the current zero-crossing it may therefore stretch beyond the current zero-crossing. The forbidden interval may additionally start earlier than 1 ms before the current zero-crossing and then either end at the current zero-crossing or stretch beyond it. The forbidden interval FI may as an example be 2 ms long, in which case it would end 1 ms after the current zero-crossing if starting 1 ms before it. The safe window SW may in turn stretch between the beginning of the forbidden interval FI associated with the leading phase and a forbidden interval associated with a preceding current zero-crossing of the first trailing phase TP1. The safe window SW may more particularly have a length that is 1/6 of the period of the current waveform minus the length of the forbidden interval. The opening phase angle selected by the control unit 26 at which circuit breaker opening is finalized will therefore precede the forbidden interval and with advantage be in the safe window SW. The length of the safe window may as an example be 2 ms long.

According to some aspects, the opening phase angle has to be outside of the forbidden interval FI. An opening phase angle thus has to precede the current zero-crossing of its corresponding phase by the length of the forbidden interval FI. This means that the phase angle at which opening is performed has to be outside of the forbidden interval FI of the corresponding phase.

According to another aspect the opening phase angle of the leading phase is within the safe window SW. If all the branches are opened when the opening phase angle of the leading phase is in the safe window, then no opening phase angle will be in the forbidden interval FI.

According to yet another aspect the contact pairs of the circuit breaker 12 may be operated independently. It may thus be possible to open a contact pair of the circuit breaker 12 independently of the other contact pairs. The branches of the circuit breaker may thus be opened independently of one another. In this case it is possible that two of the contact pairs are opened simultaneously, while a third is opened at another time. It is more particularly possible that one branch is opened according to the defined relationship of the leading phase followed by the simultaneous opening of the remaining two branches. One contact pair may thus be opened first, followed by the opening of the remaining two contact pairs. The contact pair of the leading phase LP may for instance be opened in the safe window SW using the signal SA (see fig. 3), while the contact pairs of the first and second trailing phases TP1 and TP2 may be simultaneously opened later using the signals SB and SC. The opening of the contact pairs in the first and second trailing phases TP1 and TP2 may also be made outside of the forbidden intervals of these trailing phases, i.e. more than 1 ms before their current zero-crossings in an example where the forbidden interval FI is 1 ms long. Here it may also be mentioned that is also possible that all three branches are opened individually at different points in time, all outside the forbidden window of the corresponding phase.

Above the operation involving an opening of the circuit breaker 12 was disclosed. Control of the opening phase angle allows transient overvoltages to be limited.

As was mentioned earlier, it is also possible to control the phase when the circuit breaker 12 is closed. In order to do this it may be necessary to obtain voltage measurements of the AC system voltage, i.e. the voltage on the system side of the circuit breaker 12. The operation may in this case involve the control unit 26 closing the contact pairs at a closing phase angle that is at a maximum voltage of a leading phase or a minimum voltage of a leading phase, where the closing phase angle is the phase angle when the closing is finalized. This operation may also involve closing the contact pairs simultaneously or individually. In this case two branches, for instance the branches of the leading phase and the first trailing phase, may be closed at the maximum and/or minimum voltage of the leading phase while the remaining branch, such as the branch of the second trailing phase, is closed later.

Through controlling the closing phase angle at which the circuit breaker 12 is closed , the inrush currents could be decreased to a significant extent. Thereby the circuit breaker 12 would not trip on the inrush current and the potential overvoltages associated with this operation could be avoided. In case the circuit breaker is equipped with a protection relay, it is furthermore possible to use easier and more sensible setting of a relay protection to detect when an actual fault occurs, as this level should be set as low as possible but should be higher than the inrush current (which will now be limited at a lower level than earlier).

Moreover, also the electrical stresses may be reduced, in particular on the drive transformer, which may otherwise fail. Further, the use of RC snubbers may be omitted, thus decreasing the cost since these do not have to be designed and installed. Thus, both reduced cost and increased reliability would be the benefit. Another benefit is that vacuum circuit breakers could be used.

The control unit may be realized in the form of one or more processors together with computer program memory including computer program code for performing the desired control functionality when being run on the processor. As an alternative it may be provided in the form of an Application Specific Integrated Circuit (ASIC) or Field-Programmable Gate Array (FPGA). This computer program code may also be provided on one or more data carriers which perform the functionality of the control unit when the program code thereon is being loaded in a computer forming the control unit. One such data carrier 40 with computer program code 42, in the form of a CD ROM disc, is schematically shown in fig. 6.

From the foregoing discussion it is evident that the present invention can be varied in a multitude of ways. It shall consequently be realized that the present invention is only to be limited by the following claims.

## Claims

1. A variable speed drive (VSD) arrangement (16) connected between a load (18, 20) and an alternating current (AC) system (10) via a drive transformer (14) and a circuit breaker (12), the VSD arrangement (16) comprising:
an alternating current to alternating current (AC - AC) converter (24) having a load side for connection to said load (18, 20) and a drive side for connection to the AC system (10), and
a control unit (26) configured to control the AC to AC converter (24) for operating the load,
wherein the control unit (26) is further configured to execute the following steps when there is a need to operate the circuit breaker (12):
obtain measurements of at least one electrical property (EP) of the connection between the AC system (10) and the converter (24),
determine at least one phase angle when the circuit breaker (12) is to be operated based on the measurements, and
send, to the circuit breaker (12), at least one control signal (S; SA, SB, SC) controlling the circuit breaker (12) to perform the operation at the determined phase angle.

2. The VSD arrangement (16) according to claim 1, wherein the operation is the opening of the circuit breaker and the determined phase angle is an opening phase angle that is a phase angle of the current through the circuit breaker.

3. The VSD arrangement (16) according to claim 2, wherein the measured electrical property comprises a current delivered by the drive transformer (14) to the converter (24), and the control unit (26), when determining an opening phase angle, is configured to determine the current through the circuit breaker based on the current delivered by the drive transformer.

4. The VSD arrangement (16) according to claim 2 or 3, wherein the connection between the AC system (10) and the converter (24) is a three-phase connection and the determined opening phase angle comprises the opening phase angle of a leading phase, which opening phase angle has a determined relationship to current zero-crossings.

5. The VSD arrangement (16) according to claim 4, wherein the determined relationship comprises a forbidden interval (FI) for an opening phase angle, which forbidden interval (FI) is at least 1 ms long, starts at least 1 ms before a current zero-crossing of the leading phase and ends at or after said current zero-crossing of the leading phase.

6. The VSD arrangement (16) according to claim 5, wherein the determined relationship comprises a safe window (SF) between the beginning of the forbidden interval (FI) and a forbidden interval associated with a preceding current zero-crossing of a trailing phase, the opening phase angle of the leading phase being within the safe window.

7. The VSD arrangement (16) according to any of claims 1 - 6, wherein the circuit breaker has three branches that are opened simultaneously.

8. The VSD arrangement (16) according to any of claims 1 - 6, wherein the circuit breaker has three branches and at least one branch is opened at a different time than the rest of the branches.

9. The VSD arrangement (16) according to claim 8 when depending on claim 4, wherein one branch is opened according to the defined relationship to the leading phase followed by the simultaneous opening of the remaining branches.

10. The VSD arrangement (16) according to claim 1, wherein the electrical properties comprise a voltage at a system side of the circuit breaker (12), the operation is the closing of the circuit breaker (12) and the determined phase angle is a closing phase angle.

11. The VSD arrangement (16) according to claim 10, wherein the closing phase angle comprises the phase angle of the maximum or minimum voltage of the leading phase.

12. The VSD arrangement (16) according to any previous claim, further comprising the drive transformer (14).

13. A method of operating a circuit breaker (12) from a variable speed drive (VSD) arrangement (16) connected between a load (18, 20) and an alternating current (AC) system (10) via a drive transformer (14) and the circuit breaker (12), the VSD arrangement (16) comprising an alternating current to alternating current (AC - AC) converter (24) having a load side connected to the load (18, 20) and a drive side connected to the AC system (10), the method being performed by a control unit (26) of the VSD arrangement configured to control the AC to AC converter (24) for operating the load and comprising, when there is a need to operate the circuit breaker (30), the steps of:
obtaining (34) measurements of at least one electrical property (EP) of the connection between the AC system (10) and the converter (24),
determine (36) at least one phase angle when the circuit breaker (12) is to be operated based on the measurements, and
send, to the circuit breaker (12), at least one control signal (S; SA, SB, SC) controlling the circuit breaker (12) to perform the operation at the determined phase angle.

14. A method according to claim 13, wherein the operation is the opening of the circuit breaker and the determined phase angle is an opening phase angle that is a phase angle of the current through the circuit breaker (12).

15. A computer program product for operating a circuit breaker (12) from a variable speed drive (VSD) arrangement (16) connected between a load (18, 20) and an alternating current (AC) system (10) via a drive transformer (14) and the circuit breaker (12), the VSD arrangement (16) comprising an alternating current to alternating current (AC - AC) converter (24) having a load side connected to the load (18, 20) and a drive side connected to the AC system (10), the computer program product comprising a data carrier (40) with computer program code (42) which when run in a control unit (26) of the variable speed drive arrangement configured to control the AC to AC converter (24) for operating the load, causes the control unit (26) to execute the following steps when there is a need to operate the circuit breaker:
obtain measurements of at least one electrical property (EP) of the connection between the AC system (10) and the converter (24),
determine at least one phase angle when the circuit breaker (12) is to be operated based on the measurements, and
send, to the circuit breaker (12), at least one control signal (S; SA, SB, SC) controlling the circuit breaker (12) to perform the operation at the determined phase angle.
